# EUROPÄISCHE PATENTSCHRIFT

(11) **EP 0 515 920 B1**
(45) Veröffentlichungstag und Bekanntmachung des Hinweises auf die Patenterteilung: **09.08.1995**
(21) Anmeldenummer: 92108167.5
(22) Anmeldetag: 14.05.1992
(51) Int. Cl.: G02C 13/00, B29D 12/02

(54) **Verfahren zur Herstellung einer Brillenfassung**
Method of producing a spectacle frame
Procédé de production d'une monture de lunettes

(30) Priorität: 15.05.1991 DE 4115829
(43) Veröffentlichungstag der Anmeldung: 02.12.1992
(73) Patentinhaber: OPTIK PARTNER AG & CO., 73529 Schwäbisch Gmünd (DE)
(72) Erfinder: Frank, Kurt, Dipl.-Ing., W-7070 Schwäbisch Gmünd (DE); Malthaner, Rolf, W-7133 Maulbronn-Schmie (DE)
(74) Vertreter: Baronetzky, Klaus, Dipl.-Ing.

(56) Entgegenhaltungen:
- DE-B- 1 225 411
- FR-A- 1 356 013
- US-A- 2 985 556
- US-E- 26 237

## Beschreibung

Die Erfindung betrifft ein Verfahren zur Herstellung einer Brillenfassung gemäß dem Oberbegriff der Ansprüche 1 sowie 9.

Ein derartiges Verfahren läßt sich beispielsweise aus der DE-AS 12 25 411 entnehmen. Heutzutage werden derartige Brillenfassungen hergestellt, indem eine Kunststoffplatte in einer Größe von ca. 60 x 180 mm und einer Stärke von beispielsweise 10 mm durch entsprechende Fräsprozesse oder andere spanabhebende Bearbeitungsverfahren in die gewünschte Form gebracht wird. Hierbei ist für die Herstellung des Mittelteils der Brille eine Stärke der Kunststoffplatte von bis zu 12 mm erforderlich. Der Grund liegt darin, daß bei hochwertigen Brillenfassungen eine einstückige Herstellung des Mittelteils gewünscht ist und der Bereich der Nasenauflage eine entsprechende Stärke der als Rohling verwendeten Kunststoffplatte bedingt.

Die Bügel der Brille werden in der Regel ebenfalls aus Kunststoffplattenmaterial hergestellt, wobei eine erheblich geringere Stärke von beispielsweise 4 mm erforderlich ist.

Nachteilig bei den bekannten Verfahren ist, daß die Rohlinge hoher Stärke, die beispielsweise aus Celluloseacetet bestehen, vergleichsweise teuer sind. Der Fräsprozeß dauert vergleichsweise lange, und es entsteht ein hoher Abfallanteil. Zudem ist die Lagerhaltung wie auch die Lieferzeiten für die unterschiedlich starken und gefärbten Rohlinge ungünstig.

Bei Fassungen, die weniger hohen Qualitätsansprüchen genügen müssen, kann man im Bereich der Nasenauflagen Kunststoffplättchen aufkleben, so daß die Mittelteil-Rohlinge dünner sein können. Hierdurch wird der Herstellvorgang jedoch noch verlängert, denn nach dem Aufkleben der Plättchen müssen die Rohlinge sorgfältig und lange getrocknet werden.

Die Trocknungszeit richtet sich hierbei nach Erfahrungswerten und hängt in gewissem Grade von der Form und Stärke der zu erstellenden Brillenfassung bzw. der dortigen Nasenauflage ab. Zur Sicherheit muß eine Trocknungszeit gewählt werden, die eine völlige Durchtrocknung gewährleistet. Anderfalls können im Bereich der Klebefuge Einfallstellen entstehen, die darauf zurückzuführen sind, daß die Klebeflächen, d.h., die der Klebefuge zugewandten Flächen des Rohlings und des aufgeklebten Plättchens, stark angelöst werden müssen. Entstehen derartige Einfallstellen, ist die Brillenfassung jedoch praktisch unbrauchbar.

Demgegenüber liegt der Erfindung die Aufgabe zugrunde, ein Verfahren zur Herstellung einer Brillenfassung gemäß dem Oberbegriff der Ansprüche 1 sowie 9 zu schaffen, bei welchem sich eine hervorragende Qualität mit kostengünstigerer Herstellung und geringerer Lagerhaltung auch bei einer großen Farben- und Formenvielfalt der Brillenfassungen verbinden läßt.

Diese Aufgabe wird erfindungsgemäß durch Anspruch 1 gelöst. Vorteilhafte Weiterbildungen ergeben sich aus den Unteransprüchen.

Bei einer erfindungsgemäßen Brillenfassung ist es vorgesehen, den Rohling einem Auftrag-, insbesondere einem Aufspritzverfahren zu unterwerfen und an den Stellen, an welchen die Brillenfassung erhaben ausgebildet sein soll, also beispielsweise im Bereich der Nasenauflage oder im Bereich der Scharniere, Material aufzutragen, insbesondere aufzuspritzen. Dies ermöglicht eine rasche Herstellung der Brillenfassung, denn die erforderlichen Fräsarbeiten können beispielsweise unmittelbar nach der Abkühlung und damit Erstarrung des Materials durchgeführt werden.

Das Auftragverfahren wird hierbei so gewählt, daß eine intensive Verbindung zwischen Auftragmaterial, das ein Formkörper sein kann, und Rohling sichergestellt ist. Beispielsweise kann im Spritzgußverfahren das gleiche Material aufgespritzt werden, das auch für die Herstellung des Plattenrohlings verwendet wurde, insbesondere also das bekannte Celluloseacetat.

Besonders günstig ist es, daß sich aufgrund der gleichen Materialien ein integraler Aufbau der fertigen Brillenfassung ergibt und eine Klebefuge und die hiermit verbundenen Nachteile vermieden werden können. Ferner ist es besonders vorteilhaft, daß eine separate und zusätzliche Lagerhaltung für die unterschiedlich starken und unterschiedlich gefärbten Kunststoffplättchen od. dgl. völlig entfällt sowie daß mit einer einheitlichen niedrigeren Plattenstärke von beispielsweise 4 mm für die Rohlinge gearbeitet werden kann. Die Plattenstärke kann somit der Plattenstärke der bislang für die Bügel verwendeten, preisgünstigen Plattenrohlinge entsprechen. Damit wird auch die Lagerhaltung für die Plattenrohlinge erheblich kostengünstiger, zumal die Lieferzeiten beispielsweise für 12-mm-Platten aus Celluloseacetat ohnehin erheblich größer als die Lieferzeiten für 4-mm-Platten sind.

Nach Aufbringung der Formkörper kann die Brillenfassung den Fräsprozessen unterworfen werden, wobei der Abfallanfall gegenüber einer aus 12-mm-Material hergestellten Brillenfassung um mindestens die Hälfte reduziert wird. Da mit geringeren Plattenstärken gearbeitet werden kann, sind die Standzeiten der Fräser höher, und der Fräsprozeß kann erheblich schneller fortschreiten.

Gemäß einer vorteilhaften Ausgestaltung kann der Formkörper der gewünschten Ausgestaltung der Nasenauflage bzw. des Scharniers zumindest angenähert sein, so daß dort höchstens ein leichtes Befräsen erforderlich ist. Bei einer entsprechend sorgfältigen und formtreuen Durchführung des Spritzvorgangs kann ein nachträgliches Befräsen vollständig entfallen.

Besonders günstig ist es, daß das erfindungsgemäße Verfahren leicht automatisierbar ist. Zweckmäßig werden die Platten auf einer stabilen Unterlage automatisch dem Spritzkopf zugeführt und weitergefördert, sobald der Spritzgießvorgang abgeschlossen ist. Hierbei ist es besonders günstig, daß auch eine Materialstärke von 4 mm ohne weiteres dem erforderlichen Spritzdruck standhält, ohne daß eine Verformung auftreten würde.

Wird seitlich des Förderbandes zwischen Spritzkopf und Fräser ein auf die Rohlinge gerichtetes Gebläse eingesetzt, läßt sich aufgrund der so erzielten Abkühlung der Herstellvorgang noch weiter beschleunigen. Besonders günstig ist es ohnehin, daß spezielle Trocknungszeiten vollständig entfallen.

Ferner ist es besonders günstig, daß trotz der Verwendung der preisgünstigen Rohmaterialplatten mit der Stärke von 4 mm eine integral geformte, großflächige Nasenauflage erstellt werden kann, deren Breite auch die ansonsten maximal üblichen 12 mm gewünschtenfalls übersteigen kann. Aufgrund der Materialwahl ist ein Übergang zwischen dem eigentlichen Rohling und dem Formkörper nicht sichtbar.

Für die Vorbehandlung des Plattenrohmaterials empfiehlt es sich, dieses zu entfetten und die Plattenoberfläche zu säubern. Besonders günstig kann ein Lösungsmittelgemisch aus 92% Aceton und 8% Ethylglykolacetet eingesetzt werden. Hierbei bewirkt das Aceton eine schlagartige, kurzzeitig wirkende Anlösung der Oberfläche, während das Ethylglykolacetat die Oberfläche nachhaltig erweicht und homogenisiert, so daß beim Aufspritzen der Formkörper die Spritzgußmasse sich leicht mit der angelösten zähen Oberfläche des Plattenrohlings vermischt.

Diese Art der Vorbehandlung kann beispielsweise dadurch erfolgen, daß die Plattenrohlinge mit einem mit dem Lösungsmittel getränkten Schwamm, Lappen od. dgl. abgewischt werden, wobei es sich versteht, daß dieses Abwischen in einer Fertigungsstraße mit einer entsprechenden Auftragswalze automatisiert werden kann.

Gemäß einer weiteren vorteilhaften Ausgestaltung ist es vorgesehen, Hilfsverstärkungen zusätzlich anzuspritzen, die bei der Magazinierung der Rohlinge für vollautomatische CNC-Fräsmaschinen ein Kippen der Rohlinge vermeiden können und während des Fräsvorgangs wieder entfernt werden.

Ferner versteht es sich, daß das gleiche Verfahren bei der Bügelherstellung eingesetzt werden kann. Im Scharnierbereich lassen sich so Verstärkungen anspritzen, so daß die Stärke des Plattenrohlings für die Bügel weiter reduziert werden kann.

Weitere Vorteile, Einzelheiten und Merkmale ergeben sich aus der nachstehenden Beschreibung eines Ausführungsbeispiels der Erfindung anhand der Zeichnung.

Es zeigen:
- Fig. 1: eine perspektivische Ansicht eines Plattenrohlings zur Herstellung einer erfindungsgemäßen Brillenfassung, wobei Formkörper im Bereich der Nasenauflage sowie der Scharniere aufgetragen sind;
- Fig. 2: eine weitere Ausgestaltung des Rohlings gemäß Fig. 1;
- Fig. 3: eine perspektivische Ansicht eines Mittelteils einer erfindungsgemäßen Brillenfassung, nachdem die Gläseröffnungen ausgefräst sind;
- Fig. 4: eine perspektivische Ansicht der Brillenfassung gemäß Fig. 3, nachdem der Fräsvorgang abgeschlossen ist;
- Fig. 5: eine Ansicht der Brillenfassung gemäß Fig. 4, jedoch aus einer anderen Perspektive; und
- Fig. 6: eine perspektivische Ansicht eines nach dem erfindungsgemäßen Verfahren hergestellten Bügels.

Zur Herstellung einer Brillenfassung wird ein Platten-Rohling 10 zunächst mit einem Lösungsmittel aus etwas 92% Aceton und 8% Ethylglykolacetat auf einer Oberfläche 12 abgewischt. Hierdurch wird die Oberfläche 12 gesäubert, entfettet und angelöst. Der Plattenrohling 10 besteht aus Celluloseacetat, wie es an sich für Brillenfassungen bekannt ist.

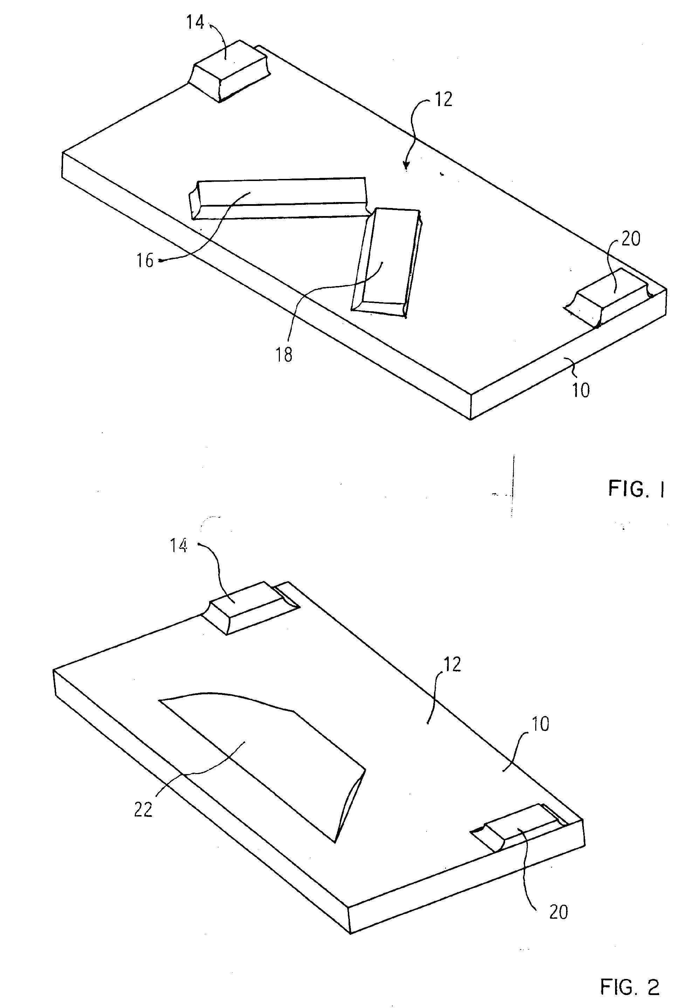

In einem Spritzgießverfahren werden dann auf den quaderförmigen Rohling 10 vier Formkörper 14, 16, 18 und 20 aufgespritzt, wie es in Fig. 1 dargestellt ist. Die Formkörper 14 und 20 sind hierbei in ihrer Anordnung und Ausbildung so gewählt, daß sie die Ausformung einer Scharnierverstärkung des aus dem Plattenrohling 10 hergestellten Mittelteils einer Brillenfassung ermöglichen. Die Formkörper 16 und 18 sind in ihrer Ausbildung und Anordnung so gewählt, daß sie die Ausformung einer Nasenauflage des Mittelteils ermöglichen.

Besonders günstig ist es, wenn als Spritzgießmaterial ein mit dem Celluloseacetet des Plattenrohlings kompatibles Material, beispielsweise ebenfalls ein Celluloseacetat, verwendet wird.

Ein Spritzgußkunststoff, dessen molekularer Aufbau demjenigen des Rohlingmaterials besonders gut entspricht, ist beispielsweise der Typ CA-SIC-wh-03451.

In dem dargestellten Ausführungsbeispiel weist der Plattenrohling 10 eine Stärke von 4 mm auf, und die Formkörper 14 bis 20 sind in einer Höhe von ebenfalls 4 mm aufgespritzt. Hiermit stehen für die Nasenauflage bei der fertig erstellten Brillenfassung 8 mm zur Verfügung. Es versteht sich, daß die gewünschten Stärken in weiten Bereichen an die Erfordernisse angepaßt werden können.

Eine abgewandelte Ausgestaltung der aufgetragenen Formkörper ist aus Fig. 2 ersichtlich. Die Formkörper 16 und 18 aus Fig. 1 sind hier zu einem Formkörper 22 zusammengefaßt, der die gesamte Breite der Nasenauflage abdeckt. Zudem ist der Formkörper 22 in seiner Kontur bereits an die Ausgestaltung der Nasenauflage angepaßt, so daß die Fräsarbeiten in dieser Beziehung entfallen können.

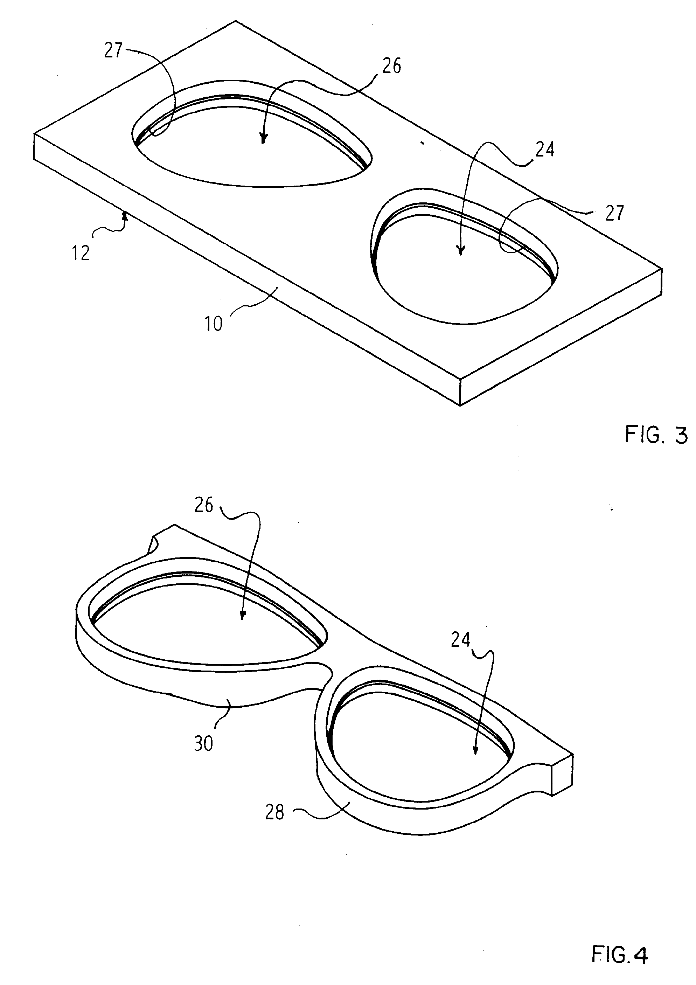

Aus Fig. 3 ist die Ausbildung von Gläseröffnungen 24 und 26 in dem Rohling 10 gemäß Fig. 1 oder 2 ersichtlich. Die Darstellung gemäß Fig. 3 zeigt den Rohling 10 von der Unterseite der Darstellung gemäß Fig. 1 und 2, so daß die Formkörper 14 bis 20 nicht sichtbar sind. Ferner ist ersichtlich, daß die Gläseröffnungen 24 und 26 je von einer umlaufenden Haltenut 27 umgeben sind, die für die Halterung der Brillengläser erforderlich sind.

Aus Fig. 4 ist ein fertig bearbeiteter Mittelteil 28 ersichtlich, der aus dem in Fig. 3 dargestellten Halbfertigprodukt durch Fräsen hergestellt wurde. Es ist ersichtlich, daß eine Nasenauflage 30 an der Stelle erhaben ausgebildet ist, an welcher zuvor der Formkörper 18 aufgebracht worden war.

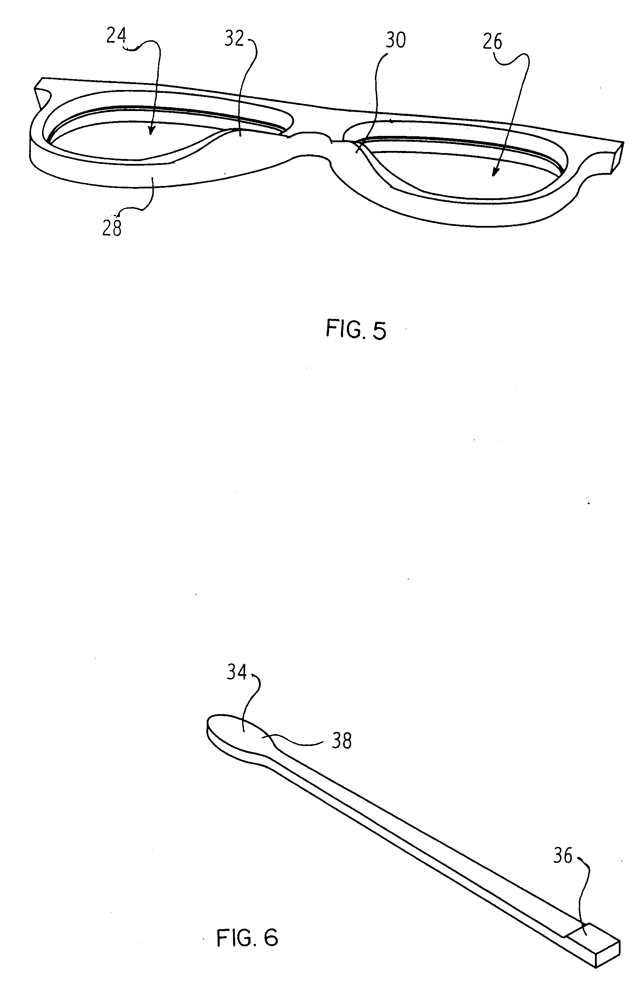

In Fig. 5 ist der in Fig. 4 dargestellte Mittelteil 28 aus Sicht einer anderen Perspektive dargestellt, so daß neben der Nasenauflage 30 auch eine Nasenauflage 32 sichtbar ist. In ihrer seitlichen Kontur entsprechen die Nasenauflagen 30 und 32 der Wölbung des Formkörpers 22 aus Fig. 2.

Aus Fig. 6 ist eine Bügel 34 ersichtlich, der aus einem Rohling hergestellt wurde, dessen Stärke 3 mm betrug. Im Scharnierbereich wurde ein Formkörper 36 aufgespritzt, der die dortige Stärke des Bügels 34 auf 4 mm erhöht. In an sich bekannter Weise verjüngt sich der Bügel nach hinten und läuft in einem etwas vergrößerten Bügelende 38 aus.

Es versteht sich, daß anstelle der dargestellten Ausführungsformen der Erfindung auch beliebige andere Formkörper in beliebiger gewünschter Formgebung auf die Rohlinge aufgespritzt werden können. Beispielsweise kann das Aufspritzen der Scharnierverstärkung mit dem Formkörper 36 auch so erfolgen, daß der Formkörper 36 an der Verjüngung des Bügels 34 zum Bügelende 38 hin teilhat, so daß eine Fräsbearbeitung in dieser Richtung ebenfalls entbehrlich ist.

Ferner versteht es sich, daß anstelle des erläuterten Aufspritzens ein beliebiges anderes geeignetes Auftragverfahren verwendet werden kann.

## Patentansprüche

1. Verfahren zur Herstellung einer Brillenfassung aus Kunststoff, bei dem aus einem Rohling durch spanabhebende Formgebung ein Mittelteil und/oder Bügel hergestellt werden, dadurch **gekennzeichnet**, daß zunächst auf den Rohling (10) Material, insbesondere unter Bildung mindestens eines Formkörpers (14, 16, 18, 20, 22), unter Erzeugung einer intensiven Verbindung mit dem Rohling (10) aufgespritzt wird, und dann die Brillenfassung durch gemeinsame Fertigbearbeitung von Rohling und aufgespritztem Material hergestellt wird.

2. Verfahren nach Anspruch 1, dadurch gekennzeichnet, daß mindestens ein Formkörper (14, 16, 18, 20, 22) an erhabenen Stellen des Mittelteils (28) und/oder des Bügels (34), insbesondere im Bereich der Nasenauflage (30) und/oder der Scharniere, angebracht wird.

3. Verfahren nach Anspruch 1 oder 2, dadurch gekennzeichnet, daß der Formkörper (14, 16, 18, 20, 22) bzw. das Material im wesentlichen homogen aufgespritzt wird.

4. Verfahren nach einem der vorhergehenden Ansprüche, dadurch gekennzeichnet, daß als Rohling (10) für das Mittelteil (28) und für die Bügel jeweils Basisplatten mit gleicher Stärke verwendet werden.

5. Verfahren nach einem der vorhergehenden Ansprüche, dadurch gekennzeichnet, daß die aufgespritzten Formkörper (14, 16, 18, 20, 22) aus einem Celluloseacetat bestehen, das dem Celluloseacetat des Rohlings (10) mindestens ähnlich ist.

6. Verfahren nach einem der vorhergehenden Ansprüche, dadurch gekennzeichnet, daß die intensive Verbindung zwischen Rohling (10) und Formkörper (14, 16, 18, 20, 22) durch eine Vorbehandlung des Rohlings (10) mit einem Lösungsmittelgemisch, insbesondere aus 80 bis 98% Aceton und 20 bis 2% Ethylglykolacetat, erreicht wird.

7. Verfahren nach einem der vorhergehenden Ansprüche, dadurch gekennzeichnet, daß zusätzlich ein Kippstabilisierungs-Formkörper angespritzt wird, mit welchem ein Kippen der aufgestellten Mittelteile (28) beim Zuführen zu der spanabhebenden Formgebungsmaschine, insbesondere einer CNC-Fräsmaschine verhinderbar ist, welcher Formkörper von der Formgebungsmaschine spanabhebend bearbeitet wird.

8. Verfahren nach einem der vorhergehenden Ansprüche, dadurch gekennzeichnet, daß der oder die Formkörper (14, 16, 18, 20, 22) der gewünschten Form der erhabenen Stelle mindestens angenähert aufgespritzt wird, und die weitere spanabhebende Bearbeitung im wesentlichen nur den Rohling (10) betrifft.

9. Verfahren zur Herstellung einer Brillenfassung, bei dem ein Rohling spanabhebend oder schleifend bearbeitet wird, dadurch gekennzeichnet, daß zunächst der Rohling zur intensiven Verbindung mit Formkörpern vorbehandelt wird und diese an den Stellen aufgetragen, insbesondere aufgespritzt werden, an welchen die Brillenfassung erhabene Stellen aufweisen soll.

## Claims

1. A method of producing a spectacle frame from plastics material, in which a cental part and/or side-pieces are produced from a blank by machining, characterised in that firstly material is applied by spraying on to the blank (10), in particular forming at least one moulding (14, 16, 18, 20, 22), creating a strong bond with the blank (10), and then the spectacle frame is produced by common finish-machining of the blank and the sprayed-on material.

2. A method according to Claim 1, characterised in that at least one moulding (14, 16, 18, 20, 22) is applied at raised locations of the central part (28) and/or of the side-piece (34), in particular in the vicinity of the nose support (30) and/or of the hinges.

3. A method according to Claim 1 or 2, characterised in that the moulding (14, 16, 18, 20, 22) and/or the material is sprayed on substantially homogeneously.

4. A method according to any one of the preceding Claims, characterised in that in each case base sheets of equal thickness are used as the blank (10) for the central part (28) and for the side-pieces.

5. A method according to any one of the preceding Claims, characterised in that the sprayed-on mouldings (14, 16, 18, 20, 22) consist of a cellulose acetate which is at least similar to the cellulose acetate of the blank (10).

6. A method according to any one of the preceding Claims, characterised in that the strong bond between the blank (10) and the mouldings (14, 16, 18, 20, 22) is achieved by pretreatment of the blank (10) with solvent mixture, in particular of 80 to 98 % acetone and 20 to 2 % ethyl glycol acetate.

7. A method according to any one of the preceding Claims, characterised in that a tilt-stabilisation moulding is additionally sprayed on, which makes it possible to prevent tilting of the applied central parts (28) when being fed to the machining machine, in particular a CNC milling machine, which moulding is machined by the shaping machine.

8. A method according to any one of the preceding Claims, characterised in that the moulding or mouldings (14, 16, 18, 20, 22) of the desired shape of the raised location is sprayed-on at least approximately, and the further machining operation affects substantially only the blank (10).

9. A method for the production of a spectacle frame, in which a blank is machined by cutting or grinding, characterised in that firstly the blank is pretreated for a strong bond with mouldings and the latter are applied, in particular sprayed on, at the locations at which the spectacle frame is intended to have raised locations.

## Revendications

1. Procédé pour fabriquer une monture de lunettes en matière plastique, selon lequel on fabrique une partie médiane et/ou une branche à partir d'une ébauche par formage avec enlèvement de copeaux, caractérisé en ce qu'on moule par injection, sur l'ébauche (10), un matériau, notamment moyennant la formation d'au moins une partie moulée (14,16,18,20,22), avec établissement d'une liaison intense avec l'ébauche (10), puis on fabrique la monture de lunettes au moyen d'un usinage de finition commun de l'ébauche et du matériau moulé par injection.

2. Procédé selon la revendication 1, caractérisé en ce qu'on dépose une partie moulée (14,16,18,20,22) en des emplacements surélevés de la partie médiane (28) et/ou de la branche (34), notamment dans la zone de l'appui (30) pour le nez et/ou de la charnière.

3. Procédé selon la revendication 1 ou 2, caractérisé en ce qu'on moule par injection d'une manière essentiellement homogène la partie moulée (14,16,18,20,22) du matériau, d'une manière essentiellement homogène.

4. Procédé selon l'une des revendications précédentes, caractérisé en ce qu'on utilise comme ébauche (10) pour la partie médiane (28) et pour la branche, respectivement des plaques de base possédant la même épaisseur.

5. Procédé selon l'une des revendications précédentes, caractérisé en ce que les parties moulées formées par moulage par injection (14,16,18,20,22) sont formées d'acétate de cellulose, qui est au moins similaire à l'acétate de cellulose de l'ébauche (10).

6. Procédé selon l'une des revendications précédentes, caractérisé en ce que la liaison intense entre l'ébauche (10) et les parties moulées (14,16,18,20,22) est obtenue au moyen d'un traitement préalable de l'ébauche (10) avec un mélange de solvant, constitué notamment par 80 à 98 % d'acétone et 20 à 2 % d'acétate d'éthylglycol.

7. Procédé selon l'une des revendications précédentes, caractérisé en ce qu'en supplément, on forme par moulage par injection une partie moulée fournissant une stabilisation vis-à-vis d'un basculement et qui permet d'empêcher un basculement des parties médianes posées (28) lors de l'envoi à la machine de formage avec enlèvement de copeaux, notamment une fraiseuse à commande numérique CNC, laquelle partie moulée est usinée avec enlèvement de copeaux par la machine de formage.

8. Procédé selon l'une des revendications précédentes, caractérisé en ce qu'on forme par moulage par injection la ou les parties moulées (14,16,18,20,22) d'une manière correspondant au moins de façon approximative à la forme désirée de la partie surélevée et que la poursuite de l'usinage avec enlèvement de copeaux concerne essentiellement uniquement l'ébauche (10).

9. Procédé pour fabriquer une monture de lunettes, selon lequel on usine une ébauche avec enlèvement de copeaux ou par meulage, caractérisé en ce qu'on applique tout d'abord un traitement préalable à l'ébauche pour l'établissement d'une liaison intense avec les parties moulées et qu'on dépose, notamment par moulage par injection, ces parties moulées aux emplacements auquels la monture de lunettes doit posséder des parties surélevées.
